# EUROPEAN PATENT SPECIFICATION

(11) **EP 3 375 671 B1**
(45) Date of publication and mention of the grant of the patent: **18.12.2019**
(21) Application number: 17160826.8
(22) Date of filing: 14.03.2017
(51) Int. Cl.: B60R 21/205

(54) **AIRBAG SYSTEM FOR A VEHICLE**
AIRBAGSYSTEM FÜR EIN FAHRZEUG
SYSTÈME DE COUSSIN DE SÉCURITÉ GONFLABLE POUR VÉHICULE

(43) Date of publication of application: 19.09.2018
(73) Proprietor: Faurecia Intérieur Industrie, 92000 Nanterre (FR)
(72) Inventor: ONORATO ESTEVEZ, David, 08192 SANT QUIRZE DEL VALLES (ES); URDILLO PARERA, Antonio, 08017 BARCELONA (ES); DIESTRE ESTEBE, ANGEL, 08017 BARCELONA (ES)
(74) Representative: Plasseraud IP

(56) References cited:
- WO-A1-2010/091819
- DE-A1-102011 050 419
- DE-A1-102013 213 791
- DE-A1-102016 115 385
- KR-A- 20020 065 459

## Description

The invention pertains to the field of vehicle industry and more precisely to the field of motor vehicle. The invention also pertains to the field of airbag systems for such vehicles.

Usually, a vehicle comprises at least one airbag system intended to protect users of the vehicle in case of car accident. An airbag system generally comprises an airbag receiving module which receives a folded airbag. The airbag system also comprises an airbag chute module which forms a guide to direct deployment of the airbag when this latter is inflated by an inflation device. The airbag chute module is attached, by welding for instance, to an instrument panel of the interior of the vehicle. The instrument panel has a portion, which covers an opening of the airbag chute module, which has a weakness such that, in case of inflation of the airbag, this later is deployed in the interior of the vehicle through the opening of the airbag chute module and the portion of the instrument panel which breaks.

Conventionally, the airbag chute module and the airbag receiving module are attached to a cross-car beam of the vehicle. The airbag chute module has a specific attachment portion to the cross-car beam. Moreover, the airbag chute module is attached to the cross-car beam by means of two metal brackets which have two portions. A first portion is fixed to the cross-car beam and a second portion is fixed to the airbag chute module. Hence, the airbag chute module is attached to the cross-car beam by means of three fixation points. These three fixation points ensure that the airbag system is correctly attached to the cross-car beam of the vehicle. However, attaching the airbag system to the cross-car beam of the vehicle is rather time-consuming.

Otherwise, document DE 10 2013 213 791 A1 discloses an airbag system for a vehicle comprising:
- an airbag chute module which forms a guide to direct an airbag deployment and which includes a second attachment portion to an airbag receiving module, and
- a reinforcement body including first attachment means adapted to attach the reinforcement body to a cross-car beam of the vehicle and second attachment means adapted to attach the reinforcement body to the airbag chute module, the first attachment means of the reinforcement body covering the first attachment portion of the airbag chute module and the second attachment means of the reinforcement body covering the second attachment portion of the airbag chute module.

An aim of the invention is to provide an airbag system that can be attached to a cross-car beam of a vehicle quickly and easily.

To do so, the invention provides an airbag system for a vehicle comprising:
- an airbag chute module which forms a guide to direct an airbag deployment and which includes a first attachment portion to a cross-car beam of the vehicle and a second attachment portion to an airbag receiving module,
- a reinforcement body including first attachment means adapted to attach the reinforcement body to the cross-car beam of the vehicle and second attachment means adapted to attach the reinforcement body to the airbag chute module,
wherein:
- the second attachment portion of the airbag chute module including two attachment bodies to the airbag receiving module which are respectively arranged on two opposite side walls of the airbag chute module,
- the second attachment means of the reinforcement body including two bodies which respectively cover the two attachment bodies of the airbag chute module, and
- the first attachment means of the reinforcement body cover the first attachment portion of the airbag chute module and the second attachment means of the reinforcement body cover the second attachment portion of the airbag chute module.

The reinforcement body provides structural reinforcement to the airbag system. Thus, it is possible to use one portion to attach simply and quickly the airbag chute module to the cross-car beam of the vehicle. Moreover, the reinforcement body forms an interface between the cross-car beam and the airbag receiving module. The airbag system according to the invention provides an airbag chute module which is attached to the cross-car beam by means of one fixation point only. The reinforcement body is attached to the airbag chute module and to the airbag receiving module such that it forms an interface between these two latters. The airbag system is consequently firmly secured to the cross-car beam. Moreover, the second attachment portion of the airbag chute module is reinforced. The airbag chute module is firmly secured to the airbag receiving module.

In preferred embodiments of the invention, one or more of the following arrangements may possibly be used:
The reinforcement body essentially includes metal.

The airbag chute module is even more firmly secured to the airbag receiving module.

The reinforcement body has a U-shaped profile and includes two end branches which form the two bodies which respectively cover the two attachment portions of the airbag chute module.

Consequently, the reinforcement body has a symmetrical shape and is easier to manufacture.

The reinforcement body includes a central branch, arranged between the two end branches, which includes a plurality of ribs, and the airbag chute module includes a plurality of holes in which the plurality of ribs is arranged. Preferably, the airbag chute module has four holes and the reinforcement body has four ribs. The ribs can also have other attachment means, such as through, holes making it possible to attach the reinforcement body to other parts of the bodywork of the vehicle.

The reinforcement body is firmly positioned to the airbag chute module and can support vibrations.

The central branch is arranged on a portion of the airbag chute module which carries a plurality of hinges adapted to be actuated in case of airbag deployment.

The airbag chute module includes at least one rib arranged on a peripheral edge, and the second attachment means which cover the second attachment portion of the airbag chute module have a shape complementary to the rib such that the reinforcement body and the airbag chute module are positioned one from each other in one direction.

The attachment between the airbag chute module and the reinforcement body is improved.

The second attachment portion of the airbag chute module and the second attachment means which cover the second attachment portion include through hole which face to each other, and the airbag system includes one bracket which is arranged on a surface of the second attachment portion opposite to a surface which is covered by the second attachment means of the reinforcement body, said bracket having at least one nut adapted to receive a screw to attach the airbag chute module to the reinforcement body. Preferably, the second attachment portion and the second attachment means include two through holes which respectively face to each other.

The airbag system can be quickly assembled.

The second attachment means which cover the second attachment portion include at least one through hole complementary to a pin of the second attachment portion.

The through hole and the pin is a Poka-yoke system.

The airbag system includes at least one spacer arranged between the second attachment portion of the airbag chute module and the second attachment means which cover the second attachment portion. Preferably, the airbag system includes four spacers.

The spacers limit frictions between the airbag chute module and the reinforcement body.

The first attachment means of the reinforcement body include a through hole which faces a through hole of the first attachment portion of the airbag chute module.

The airbag system includes an airbag receiving module.

The airbag receiving module is attached to the second attachment portion of the airbag chute module and to the second attachment means which cover the second attachment portion of the airbag chute module, such that the second attachment means are arranged between the airbag receiving module and the airbag chute module.

The reinforcement body provides structural reinforcement to the airbag chute module and the airbag receiving module and is also a spacer between these two elements.

The airbag system includes a folded airbag arranged on the airbag receiving module.

The invention also provides a vehicle interior including at least one airbag system as previously described.

The airbag system can form a front passenger airbag system.

Other features and advantages of the invention will become apparent from the following description of one embodiment, given by way of a non-limiting example, with reference to the accompanying drawings.

In the drawings:
- Figure 1 is a perspective view of an interior of a vehicle which includes an airbag system according to the invention,
- Figure 2 is a perspective view of an airbag chute module of the airbag system,
- Figure 3 is a perspective view of the airbag chute module and of a reinforcement body according to the invention,
- Figure 4 is a perspective view of the airbag chute module, the reinforcement body and a cross-car beam,
- Figure 5 is a perspective view of the airbag system, and,
- Figures 6, and 7 are respectively perspective view and side views of parts of the airbag system.

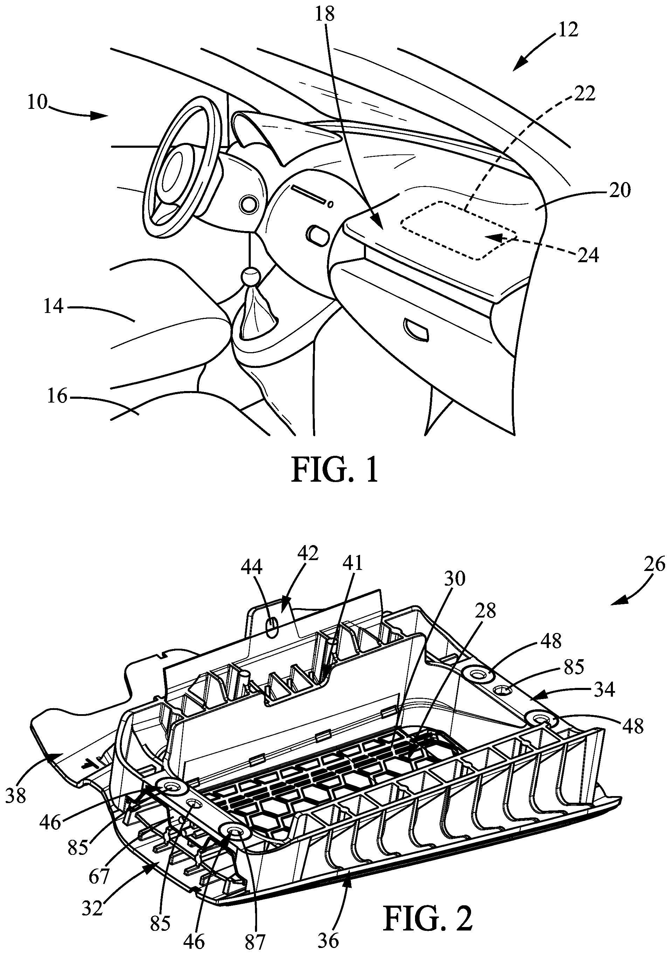

Figure 1 shows an interior 10 of a vehicle 12. In this embodiment, the vehicle 12 is a motor vehicle. However, the vehicle 12 could be any types of vehicle which can have an airbag system.

The interior 10 of the vehicle 12 includes two seats 14, 16. The seat 14 is a driver seat and the seat 16 is a front passenger seat. The interior 10 of the vehicle 12 also includes an instrument panel 18 which includes a glove box in front of the passenger seat 16. Above the glove box, in reference to a vertical axis (Z) when the vehicle 12 is on a normal position of use, the instrument panel 18 includes a portion 20 which extends sensibly horizontally, from the rear to the front of the vehicle 12. The portion 20 of the horizontal panel 18 includes a section 22 which forms an upper part of an airbag system 24. This section 22 is slightly weakened compared to the other part of the portion 20 such that, if required, for instance in the event of a vehicle impact, an airbag can break the section 22 and deploy in the interior 10 of the vehicle 12 to protect a user seated on the passenger seat 16. Thus, the airbag system 24 forms a front passenger airbag system. However the airbag system 24 can be arranged in other part of the interior 10 of the vehicle 12.

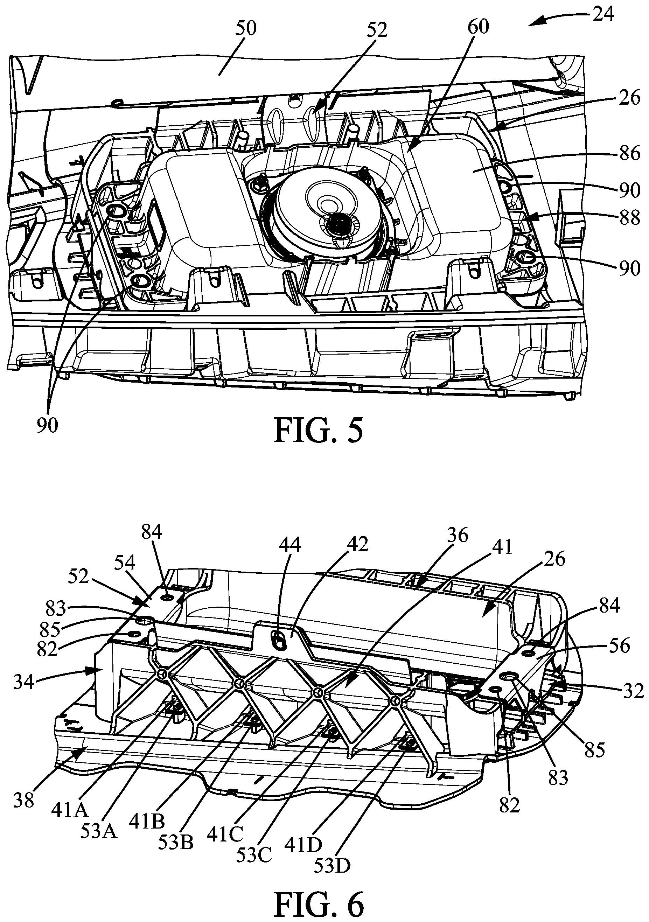

The airbag system 24 can be seen, among others on figure 5. It includes an airbag chute module 26, a reinforcement body 52, an airbag receiving module 60 and an airbag. The airbag chute module 26 and the reinforcement body 52 are attached to a cross-car beam 50 of the vehicle 12 as will be described hereinafter.

The airbag chute module 26 directs the airbag deployment in the interior 10 of the vehicle 12. The airbag receiving module 60 includes the folded airbag and is connected to an inflation device able to inflate the folded airbag to deploy it in the interior 10 of the vehicle 12. The reinforcement body 52 provides a structural reinforcement and is arranged between the airbag chute module 26 and the airbag receiving module 60.

Figure 2 shows the airbag chute module 26 of the airbag system 24. It should be noted that in figures 2 to 8, the vertical axis (Z) is reversely oriented compared to figure 1. Indeed, in figure 1, bottom of the figure corresponds to the bottom of the vehicle 12 and the top of the figure corresponds to the top of the vehicle 12. In figures 2 to 8, bottom of the figures corresponds to the top of vehicle 12 and the top of the figures corresponds to the bottom of the vehicle 12.

The airbag chute module 26 is covered by the section 22 of the portion 20 of the instrument panel 18 and forms a guide to direct the airbag deployment in the interior 10 of the vehicle 12 as previously stated. The airbag chute module 26 includes an upper part 28 comprising a flexible net 30 directly encapsulated in the section 22 to prevent the section 22 from striking the passenger seat 16 during airbag deployment. Indeed, when the airbag deploys, the net retains the section 22. The airbag chute module 26 also includes two lateral sides 32, 34, and two longitudinal sides 36, 38 surrounding the flexible net 30. The lateral side 32 corresponds to the right side of the vehicle 12 whereas the lateral side 34 corresponds to the left side of the vehicle 12. The longitudinal side 36 corresponds to the rear side of the vehicle 12 and the longitudinal side 38 corresponds to the front side of the vehicle 12. A direction which goes from the lateral side 32 to the lateral side 34 is a lateral direction and a direction which goes from the longitudinal side 36 to the longitudinal side 38 is a longitudinal direction. These directions are the same as the vehicle's 12 lateral and longitudinal directions.

The longitudinal side 38 can also carry four hinges. The flexible net 30 is complementary to these four hinges. These four hinges can be actuated in case of airbag deployment to permit the flexible net 30 to move to free an opening, around the lateral and longitudinal sides 32, 34, 36, 38 for airbag deployment.

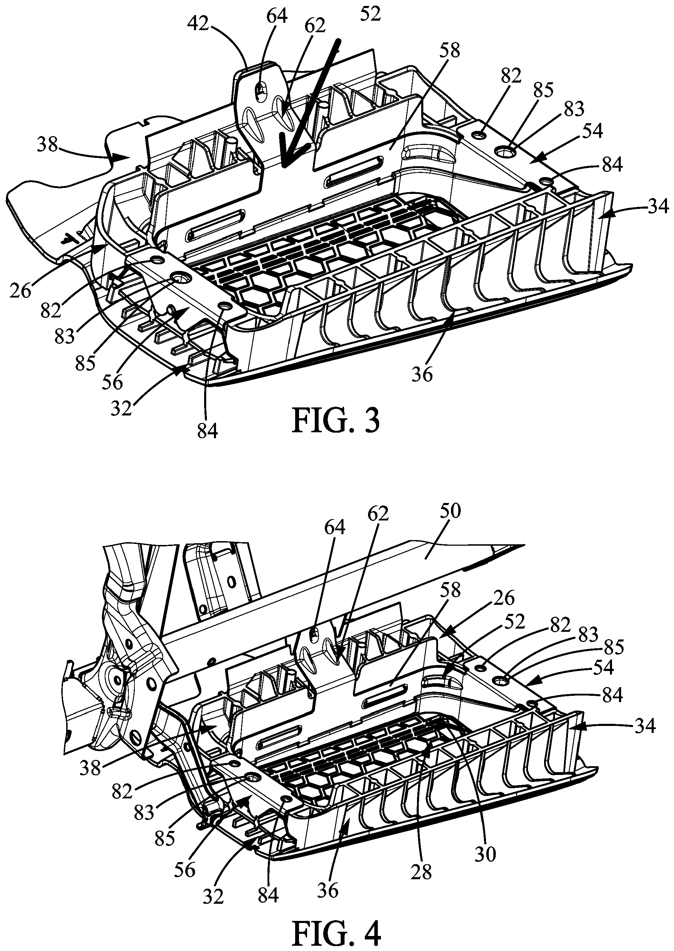

The longitudinal side 38, corresponding to the front side of the vehicle 12, includes a main part 41, carrying the four hinges, and a body 42 which extends from the main part 41 towards the bottom of the vehicle 12. This body 42 forms a first attachment portion to a cross-car beam 50, see figure 4, of the vehicle 12. Indeed, as one can see on figure 5, the airbag system 24 is arranged above the cross-car beam 50, with respect to the vertical direction (Z). Moreover, this body 42 includes a through hole 44 to attach the airbag chute module 26 to the cross-car beam 50 of the vehicle 12. As can be seen on figure 6, the main part 41 also includes four through holes 41A, 41B, 41C, 41D aligned along the lateral direction. The function of these four through holes will be described hereinafter.

Furthermore, the two lateral sides 32, 34 form respectively two attachment bodies, which extend in the longitudinal direction, to the airbag receiving module 60 illustrated on figure 5. These two attachment bodies form a second attachment portion intended to attach the airbag chute module 26 to the airbag receiving module 60. They are arranged on two opposite lateral sides of the airbag chute module 26. Each lower wall, with respect to the vertical axis (Z), of the two lateral sides 32, 34 carries two spacers 46, 48. The function of these two spacers 46, 48 will also be described hereinafter.

The airbag system 24 also includes the reinforcement body 52 that can be seen, among others, on figure 3. This reinforcement body 52 essentially includes metal. With respect to the vertical axis (Z), the reinforcement body 52 is arranged under the airbag chute module 26. The reinforcement body 52 provides structural reinforcement to the airbag system 24 and more particularly to the airbag chute module 26. Seen from the bottom of the vehicle 12, with respect to the vertical axis (Z), the reinforcement body 52 has a U-shaped profile. The reinforcement body 52 includes two end branches 54, 56 and a central branch 58 which is arranged between the two end branches 54, 56. The central branch 58 has a planar shape and extends mainly in the lateral direction. The two end branches 54, 56 have also sensibly a planar shape and extend mainly in the longitudinal direction.

The central branch 58 of the reinforcement body 52 is arranged on a portion of the main part 41 of the longitudinal side 38 of the airbag chute module 26. The central branch also includes four ribs 53A, 53B, 53C, 53D which are respectively arranged through the holes 41A, 41B, 41C, 41D of the main part 41 of the longitudinal side 38 of the airbag chute module 26. These rib/hole arrangements position the reinforcement body 52 and the airbag chute module 26 on the lateral direction. As illustrated on figure 6, the ribs 53A, 53B, 53C, 53D include each one a through hole. These through holes form further attachment means to the airbag chute module 26 by means of hooks extending from the airbag chute module 26 and passing through these through holes.

The central branch 58 of the reinforcement body 52 also includes first attachment means, which comprise here a body 62 which includes a through hole 64. This first attachment means are intended to attach the reinforcement body 52 to the cross-car beam 50. As one can see on figure 3, when the reinforcement body 52 is arranged on the airbag chute module 26, the body 62 entirely covers the body 42 which forms the first attachment portion of the airbag chute module 26 to the cross-car beam 50 of the vehicle 12. Moreover, the through hole 44 of the body 42 faces the through hole 64 of the reinforcement body 52. Hence, the cross-car beam 50 includes complementary attachment means such that the cross-car beam 50 is attached to the airbag chute module 26 and the reinforcement body 52 by means of the through holes 44, 64 of respectively the body 42 and the reinforcement body 52. Thus, there is only one fixation point between the cross-car beam 50 and the airbag chute module 26. The first attachment means of the reinforcement body 52 provide structural reinforcement such that this fixation point is strength enough for the safety of the vehicle 12.

As one can see on figure 3, the two end branches 54, 56 of the reinforcement body 52 form two bodies which entirely cover respectively the two lateral sides 32, 34 of the airbag chute module 26 which form the two attachment bodies of the airbag chute module 26 to the airbag receiving module 60. Thus, the two spacers 46 and the two spacers 48 are respectively arranged between the lower walls of the two lateral sides 32, 34 and the upper walls of the two end branches 54, 56 of the reinforcement body 52.

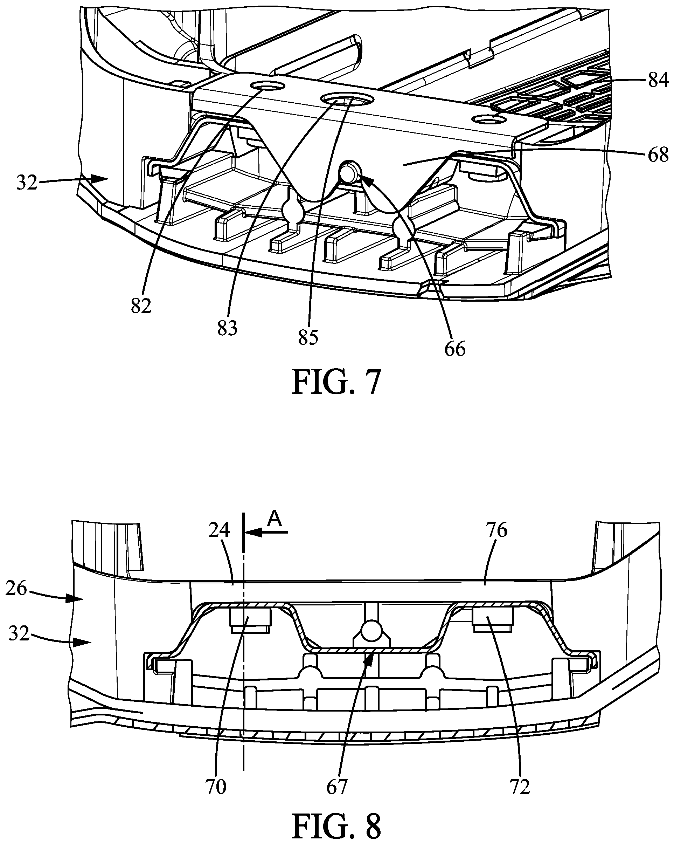

Moreover, as can be seen on figure 7, the lateral side 32 of the airbag chute module 26 includes a rib 66 arranged on a peripheral edge of the lateral side 32 and which extends laterally from it. The end branch 56 of the reinforcement body 52 includes a portion 68. The rib 66 and the portion 68 have a complementary shape such that the reinforcement body 52 and the airbag chute module 26 are positioned one from each other in the longitudinal direction.

The attachment means between the airbag chute module 26, the airbag receiving module 60 and the reinforcement body 52 will be now described.

As can be seen on figure 8, the airbag chute module 26 carries a bracket 67 which is arranged on a surface of the lateral side 32 opposite to the surface which is covered by the end branch 56 of the reinforcement body 52. The bracket 67 includes two nuts 70, 72, aligned along the longitudinal direction and able to receive one screw each one to attach the airbag chute module 26 to the reinforcement body 52 and to the airbag receiving module 60 as will be described hereinafter. The lateral side 32 includes two through holes 74, 76 aligned along the longitudinal direction and which respectively face the two nuts 70, 72 of the bracket 67. Similarly, the end branch 56 of the reinforcement body 52 includes two through holes 82, 84 aligned along the longitudinal direction and which respectively face the two through holes 74, 76 of the lateral side 32 and the two nuts 78, 80 of the bracket 67. Similarly, the two spacers 46 include each one a through hole 85, 87 aligned, in the vertical direction (Z), with the above mentioned through holes.

The end branch 56 also includes a third through hole 83 arranged between the two through holes 82, 84 but which is not equidistant from the two holes 82, 84. The lateral side 32 includes a pin 85 complementary to the hole 83. Thus, this hole/pin arrangement forms foolproof means or a poka yoke system to correctly assemble the reinforcement body 52 and the airbag receiving module 26.

Of course, the lateral side 34 and the end branch 58 also includes similar through holes and a bracket comprising two nuts. The specification of the above paragraph applies to the lateral side 34 and the end branch 58.

The airbag receiving module 60 is illustrated on figure 5. It includes a main part 86 which has a three dimensional shape and which receives the folded airbag. The main part 86 is connected to the inflation device as previously described.

The airbag receiving module 60 also includes an attachment portion 88 which forms a peripheral part with respect to the main part 86 and which is attached to the airbag chute module 26. The attachment portion 88 is arranged on the two end branches 56, 58. The attachment portion 88 also includes four threaded holes 90 which respectively face the four through holes of the two end branches 54, 56 of the reinforcement body 52, the four through holes of the two lateral sides 32, 34. Thus, by means of four screws which go through the threaded holes 90 of the attachment portion 88 to the nuts 74, 76 of the two brackets 67, the airbag receiving module 60, the reinforcement body 52 and the airbag chute module 26 are attached together. Consequently, the airbag receiving module 60, the reinforcement body 52 and the airbag chute module 26 include four fixation points.

Thus, the two end branches 54, 56 form second attachment means to attach the reinforcement body 52 to the airbag chute module 26 and to the airbag receiving module 26. As previously described, these second attachment means cover the second attachment portion of the airbag chute module 26 such that these second attachment means are arranged between the second attachment portion of the airbag chute module 26 and the attachment part 88 of the airbag receiving module 60.

It is to be understood that the embodiments of the invention disclosed herein are illustrative of the principles of the invention and that other modifications may be employed which are still within the scope of the invention.

For example the airbag receiving module 60, the airbag chute module 26 and the reinforcement body 52 can be attached by three or five fixation points. More generally, the number of fixation points between the airbag receiving module 60, the airbag chute module 26 and the reinforcement body 52 is not a limitative feature.

## Claims

1. Airbag system (24) for a vehicle (12) comprising:
- an airbag chute module (26) which forms a guide to direct an airbag deployment and which includes a first attachment portion (42) to a cross-car beam (50) of the vehicle (12) and a second attachment portion (32, 34) to an airbag receiving module (60),
- a reinforcement body (52) including first attachment means (62, 64) adapted to attach the reinforcement body (52) to the cross-car beam (50) of the vehicle (12) and second attachment means (54, 56) adapted to attach the reinforcement body (52) to the airbag chute module (26),
wherein:
the second attachment portion (32, 34) of the airbag chute module (26) includes two attachment bodies (32, 34) to the airbag receiving module (60) which are respectively arranged on two opposite side walls (32, 34) of the airbag chute module (26),
the second attachment means (54, 56) of the reinforcement body (52) include two bodies (54, 56) which respectively cover the two attachment bodies (32, 34) of the airbag chute module (26), and
the first attachment means (62, 64) of the reinforcement body (52) cover the first attachment portion (42) of the airbag chute module (26) and the second attachment means (54, 56) of the reinforcement body (52) cover the second attachment portion (32, 34) of the airbag chute module (26).

2. Airbag system (24) according to the preceding claim, wherein the reinforcement body (52) has a U-shaped profile and includes two end branches (54, 56) which form the two bodies (54, 56) which respectively cover the two attachment portions (32, 34) of the airbag chute module (26).

3. Airbag system (24) according to the preceding claim, wherein the reinforcement body (52) includes a central branch (58), arranged between the two end branches (54, 56), which includes a plurality of ribs (53A, 53B, 53C, 53D), and the airbag chute module (26) includes a plurality of holes (41A, 41B, 41C, 41D) in which the plurality of ribs (53A, 53B, 53C, 53D) is arranged.

4. Airbag system (24) according to the preceding claim, wherein the central branch (58) is arranged on a portion (41) of the airbag chute module (26) which carries a plurality of hinges adapted to be actuated in case of airbag deployment.

5. Airbag system (24) according to any one of the preceding claims, wherein the airbag chute module (26) includes at least one rib (66) arranged on a peripheral edge, and the second attachment means (54, 56) which cover the second attachment portion (32, 34) of the airbag chute module (26) have a shape complementary to the rib (66), such that the reinforcement body (52) and the airbag chute module (26) are positioned one from each other in one direction.

6. Airbag system (24) according to any one of the preceding claims, wherein the second attachment portion (32, 34) of the airbag chute module (26) and the second attachment means (54, 56) which cover the second attachment portion (32, 34) include respectively through holes (78, 80, 82, 84) which face to each other, and the airbag system (24) includes one bracket (67) which is arranged on a surface of the second attachment portion (32, 34) opposite to a surface which is covered by the second attachment means (54, 56) of the reinforcement body (52), said bracket having at least one nut (74, 76) adapted to receive a screw to attach the airbag chute module (26) to the reinforcement body (52).

7. Airbag system (24) according to the preceding claim, wherein the second attachment means (54, 56) which cover the second attachment portion (32, 34), include at least one through hole (83) complementary to a pin (85) of the second attachment portion (32, 34).

8. Airbag system (24) according to any one of the preceding claims, including at least one spacer (46, 48) arranged between the second attachment portion (32, 34) of the airbag chute module (26) and the second attachment means (54, 56) which cover the second attachment portion (32, 34).

9. Airbag system (24) according to any one of the preceding claims, wherein the first attachment means (62, 64) of the reinforcement body (52) include a through hole (64) which faces a through hole (44) of the first attachment portion of the airbag chute module (26).

10. Airbag system (24) according to any one of preceding claims, including an airbag receiving module (60).

11. Airbag system (24) according to any one of the preceding claims wherein the airbag receiving module (60) is attached to the second attachment portion (32, 34) of the airbag chute module (26) and to the second attachment means (54, 56) which cover the second attachment portion (32, 34) of the airbag chute module (26), such that the second attachment means (54, 56) are arranged between the airbag receiving module (60) and the airbag chute module (26).

12. Airbag system (24) according to any one of claims 10 and 11, comprising a folded airbag arranged on the airbag receiving module (60).

13. Vehicle interior (10) including at least one airbag system (24) according to any one of the preceding claims.

14. Vehicle interior (10) according to the preceding claim, wherein the airbag system (24) forms a front passenger airbag system.

## Patentansprüche

1. Airbagsystem (24) für ein Fahrzeug (12), welches aufweist:
- ein Airbag-Schachtmodul (26), das eine Führung bildet, um das Entfalten eines Airbags auszurichten, und das einen ersten Halterungsabschnitt (42) zu einem Querbalken (50) des Fahrzeugs (12) sowie einen zweiten Halterungsabschnitt (32, 34) zu einem Airbag-Aufnahmemodul (60) enthält,
- einen Verstärkungskörper (52), der erste Halterungsmittel (62, 64), die dazu ausgelegt sind, den Verstärkungskörper (52) an dem Querbalken (50) des Fahrzeugs (12) anzubringen, sowie zweite Halterungsmittel (54, 56), die dazu ausgelegt sind, den Verstärkungskörper (52) an dem Airbag-Schachtmodul (26) anzubringen, enthält,
wobei:
der zweite Halterungsabschnitt (32, 34) des Airbag-Schachtmoduls (26) zwei Halterungskörper (32, 34) zu dem Airbag-Aufnahmemodul (60) enthält, die jeweils an zwei entgegengesetzten Seitenwänden (32, 34) des Airbag-Schachtmoduls (26) angeordnet sind,
die zweiten Halterungsmittel (54, 56) des Verstärkungskörpers (52) zwei Körper (54, 56) enthalten, die jeweils die zwei Halterungskörper (32, 34) des Airbag-Schachtmoduls (26) abdecken, und
die ersten Halterungsmittel (62, 64) des Verstärkungskörpers (52) den ersten Halterungsabschnitt (42) des Airbag-Schachtmoduls (26) abdecken und die zweiten Halterungsmittel (54, 56) des Verstärkungskörpers (52) den zweiten Halterungsabschnitt (32, 34) der Airbag-Schachtmoduls (26) abdecken.

2. Airbagsystem (24) nach dem vorhergehenden Anspruch, wobei der Verstärkungskörper (52) ein U-förmiges Profil hat und zwei Endzweige (54, 56) enthält, die die zwei Körper (54, 56) bilden, die jeweils die zwei Halterungsabschnitte (32, 34) des Airbag-Schachtmoduls (26) abdecken.

3. Airbagsystem (24) nach dem vorhergehenden Anspruch, wobei der Verstärkungskörper (52) einen zwischen den zwei Endzweigen (54, 56) angeordneten zentralen Zweig (58) enthält, der eine Mehrzahl von Rippen (53A, 53B, 53C, 53D) enthält, und das Airbag-Schachtmodul (26) eine Mehrzahl von Löchern (41A, 41B, 41C, 41D) enthält, in denen die Mehrzahl von Rippen (53A, 53B, 53C, 53D) angeordnet ist.

4. Airbagsystem (24) nach dem vorhergehenden Anspruch, wobei der zentrale Zweig (58) an einem Abschnitt (41) des Airbag-Schachtmoduls (26) angeordnet ist, der eine Mehrzahl von Gelenken trägt, die dazu ausgelegt sind, im Falle der Entfaltung des Airbags aktiviert zu werden.

5. Airbagsystem (24) nach einem der vorhergehenden Ansprüche, wobei das Airbag-Schachtmodul (26) zumindest eine Rippe (66) enthält, die an einem Umfangsrand angeordnet ist, und die zweiten Halterungsmittel (54, 56), die den zweiten Halterungsabschnitt (32, 34) des Airbag-Schachtmoduls (26) abdecken, eine zur Rippe (66) komplementäre Form haben, so dass der Verstärkungskörper (52) und das Airbag-Schachtmodul (26) in einer Richtung voneinander positioniert sind.

6. Airbagsystem (24) nach einem der vorhergehenden Ansprüche, wobei der zweite Halterungsabschnitt (32, 34) des Airbag-Schachtmoduls (26) und die zweiten Halterungsmittel (54, 56), die den zweiten Halterungsabschnitt (32, 34) abdecken, jeweils Durchgangslöcher (78, 80, 82, 84) enthalten, die aufeinander zu weisen, und das Airbagsystem (24) einen Träger (67) enthält, der an einer Oberfläche des zweiten Halterungsabschnitts (32, 34) gegenüber einer Oberfläche angeordnet ist, die von den zweiten Halterungsmitteln (54, 56) des Verstärkungskörpers (52) bedeckt ist, wobei der Träger zumindest eine Mutter (74, 76) aufweist, die zur Aufnahme einer Schraube ausgelegt ist, um das Airbag-Schachtmodul (26) an dem Verstärkungskörper (52) anzubringen.

7. Airbagsystem (24) nach dem vorhergehenden Anspruch, wobei die zweiten Halterungsmittel (54, 56), die den zweiten Halterungsabschnitt (32, 34) abdecken, zumindest ein Durchgangsloch (83) enthalten, das zu einem Zapfen (85) des zweiten Halterungsabschnitts (32, 34) komplementär ist.

8. Airbagsystem (24) nach einem der vorhergehenden Ansprüche, das zumindest einen Abstandshalter (46, 48) enthält, der zwischen dem zweiten Halterungsabschnitt (32, 34) des Airbag-Schachtmoduls (26) und den zweiten Halterungsmitteln (54, 56), die den zweiten Halterungsabschnitt (32, 34) abdecken, angeordnet ist.

9. Airbagsystem (24) nach einem der vorhergehenden Ansprüche, wobei die ersten Halterungsmittel (62, 64) des Verstärkungskörpers (52) ein Durchgangsloch (64) enthalten, das zu einem Durchgangsloch (44) des ersten Halterungsabschnitts des Airbag-Schachtmoduls (26) weist.

10. Airbagsystem (24) nach einem der vorhergehenden Ansprüche, das ein Airbag-Aufnahmemodul (60) enthält.

11. Airbagsystem (24) nach einem der vorhergehenden Ansprüche, wobei das Airbag-Aufnahmemodul (60) an dem zweiten Halterungsabschnitt (32, 34) des Airbag-Schachtmoduls (26) und an den zweiten Halterungsmitteln (54, 56), die den zweiten Halterungsabschnitt (32, 34) des Airbag-Schachtmoduls (26) abdecken, angebracht ist, so dass die zweiten Halterungsmittel (54, 56) zwischen dem Airbag-Aufnahmemodul (60) und dem Airbag-Schachtmodul (26) angeordnet sind.

12. Airbagsystem (24) nach einem der Ansprüche 10 und 11, das einen gefalteten Airbag aufweist, der auf dem Airbag-Aufnahmemodul (60) angeordnet ist.

13. Fahrzeuginnenraum (10), der zumindest ein Airbagsystem (24) nach einem der vorhergehenden Ansprüche enthält.

14. Fahrzeuginnenraum (10) nach dem vorhergehenden Anspruch, wobei das Airbagsystem (24) ein vorderes Beifahrer-Airbagsystem bildet.

## Revendications

1. Système de coussin de sécurité gonflable (24) pour un véhicule (12) comprenant :
- un module de tir de coussin de sécurité gonflable (26) qui forme un guide pour diriger un déploiement de coussin de sécurité gonflable et qui comporte une première portion de fixation (42) à une traverse (50) du véhicule (12) et une seconde portion de fixation (32, 34) à un module de réception de coussin de sécurité gonflable (60),
- un corps de renforcement (52) comportant des premiers moyens de fixation (62, 64) adaptés pour fixer le corps de renforcement (52) à la traverse (50) du véhicule (12) et des seconds moyens de fixation (54, 56) adaptés pour fixer le corps de renforcement (52) au module de tir de coussin de sécurité gonflable (26),
dans lequel :
la seconde portion de fixation (32, 34) du module de tir de coussin de sécurité gonflable (26) comporte deux corps de fixation (32, 34) au module de réception de coussin de sécurité gonflable (60) qui sont agencés respectivement sur deux parois latérales opposées (32, 34) du module de tir de coussin de sécurité gonflable (26),
les seconds moyens de fixation (54, 56) du corps de renforcement (52) comportent deux corps (54, 56) qui recouvrent respectivement les deux corps de fixation (32, 34) du module de tir de coussin de sécurité gonflable (26), et
les premiers moyens de fixation (62, 64) du corps de renforcement (52) recouvrent la première portion de fixation (42) du module de tir de coussin de sécurité gonflable (26) et les seconds moyens de fixation (54, 56) du corps de renforcement (52) recouvrent la seconde portion de fixation (32, 34) du module de tir de coussin de sécurité gonflable (26).

2. Système de coussin de sécurité gonflable (24) selon la revendication précédente, dans lequel le corps de renforcement (52) a un profilé en forme de U et comporte deux sections d'extrémité (54, 56) qui forment les deux corps (54, 56) qui recouvrent respectivement les deux portions de fixation (32, 34) du module de tir de coussin de sécurité gonflable (26).

3. Système de coussin de sécurité gonflable (24) selon la revendication précédente, dans lequel le corps de renforcement (52) comporte une section centrale (58), agencée entre les deux sections d'extrémité (54, 56), qui comporte une pluralité de nervures (53A, 53B, 53C, 53D), et le module de tir de coussin de sécurité gonflable (26) comporte une pluralité de trous (41A, 41B, 41C, 41D) dans lesquels la pluralité de nervures (53A, 53B, 53C, 53D) est agencée.

4. Système de coussin de sécurité gonflable (24) selon la revendication précédente, dans lequel la section centrale (58) est agencée sur une portion (41) du module de tir de coussin de sécurité gonflable (26) qui porte une pluralité de charnières adaptées pour être actionnées en cas de déploiement de coussin de sécurité gonflable.

5. Système de coussin de sécurité gonflable (24) selon l'une quelconque des revendications précédentes, dans lequel le module de tir de coussin de sécurité gonflable (26) comporte au moins une nervure (66) agencée sur un bord périphérique, et les seconds moyens de fixation (54, 56) qui recouvrent la seconde portion de fixation (32, 34) du module de tir de coussin de sécurité gonflable (26) ont une forme complémentaire de la nervure (66), de sorte que le corps de renforcement (52) et le module de tir de coussin de sécurité gonflable (26) sont positionnés l'un par rapport à l'autre dans une direction.

6. Système de coussin de sécurité gonflable (24) selon l'une quelconque des revendications précédentes, dans lequel la seconde portion de fixation (32, 34) du module de tir de coussin de sécurité gonflable (26) et les seconds moyens de fixation (54, 56) qui recouvrent la seconde portion de fixation (32, 34) comportent respectivement des trous traversants (78, 80, 82, 84) qui sont en regard les uns les autres, et le système de coussin de sécurité gonflable (24) comporte un support (67) qui est agencé sur une surface de la seconde portion de fixation (32, 34) opposée à une surface qui est couverte par les seconds moyens de fixation (54, 56) du corps de renforcement (52), ledit support ayant au moins un écrou (74, 76) adapté pour recevoir une vis pour fixer le module de tir de coussin de sécurité gonflable (26) au corps de renforcement (52).

7. Système de coussin de sécurité gonflable (24) selon la revendication précédente, dans lequel les seconds moyens de fixation (54, 56) qui recouvrent la seconde portion de fixation (32, 34) comportent au moins un trou traversant (83) complémentaire à une goupille (85) de la seconde portion de fixation (32, 34).

8. Système de coussin de sécurité gonflable (24) selon l'une quelconque des revendications précédentes, comportant au moins une entretoise (46, 48) agencée entre la seconde portion de fixation (32, 34) du module de tir de coussin de sécurité gonflable (26) et les seconds moyens de fixation (54, 56) qui recouvrent la seconde portion de fixation (32, 34).

9. Système de coussin de sécurité gonflable (24) selon l'une quelconque des revendications précédentes, dans lequel les premiers moyens de fixation (62, 64) du corps de renforcement (52) comportent un trou traversant (64) qui est en regard d'un trou traversant (44) de la première portion de fixation du module de tir de coussin de sécurité gonflable (26).

10. Système de coussin de sécurité gonflable (24) selon l'une quelconque des revendications précédentes, comportant un module de réception de coussin de sécurité gonflable (60).

11. Système de coussin de sécurité gonflable (24) selon l'une quelconque des revendications précédentes, dans lequel le module de réception de coussin de sécurité gonflable (60) est fixé à la seconde portion de fixation (32, 34) du module de tir de coussin de sécurité gonflable (26) et aux seconds moyens de fixation (54, 56) qui recouvrent la seconde portion de fixation (32, 34) du module de tir de coussin de sécurité gonflable (26), de sorte que les seconds moyens de fixation (54, 56) sont agencés entre le module de réception de coussin de sécurité gonflable (60) et le module de tir de coussin de sécurité gonflable (26).

12. Système de coussin de sécurité gonflable (24) selon l'une quelconque des revendications 10 et 11, comprenant un coussin de sécurité gonflable plié agencé sur le module de réception de coussin de sécurité gonflable (60).

13. Intérieur de véhicule (10) comportant au moins un système de coussin de sécurité gonflable (24) selon l'une quelconque des revendications précédentes.

14. Intérieur de véhicule (10) selon la revendication précédente, dans lequel le système de coussin de sécurité gonflable (24) forme un système de coussin de sécurité gonflable passager avant.
